# EUROPÄISCHE PATENTSCHRIFT

(11) **EP 1 135 571 B1**
(45) Veröffentlichungstag und Bekanntmachung des Hinweises auf die Patenterteilung: **18.01.2006**
(21) Anmeldenummer: 99963267.2
(22) Anmeldetag: 29.11.1999
(51) Int. Cl.: E05F 15/16, F16D 7/04, F16F 15/12, F16F 15/315, F16H 55/14

(54) **VERFAHREN ZUR HERSTELLUNG EINES GETRIEBEMOTOR-SCHLIESSTEIL-ANTRIEBES FÜR EIN KRAFTFAHRZEUG**
METHOD FOR PRODUCING A GEAR MOTOR-LOCKING ELEMENT-DRIVE FOR A MOTOR VEHICLE
PROCEDE DE FABRICATION D'UN DISPOSITIF DE COMMANDE D'UNE PIECE DE FERMETURE D'UN MOTEUR-REDUCTEUR POUR VEHICULE

(30) Priorität: 04.12.1998 DE 19856100
(43) Veröffentlichungstag der Anmeldung: 26.09.2001
(73) Patentinhaber: SIEMENS AKTIENGESELLSCHAFT, 80333 München (DE)
(72) Erfinder: ZAPS, Klaus, D-97332 Volkach (DE)
(86) Internationale Anmeldenummer: PCT/DE1999/003780
(87) Internationale Veröffentlichungsnummer: WO 2000/034610

(56) Entgegenhaltungen:
- DE-C- 3 403 259

## Beschreibung

Die Erfindung bezieht sich auf einen Getriebemotor-Schließteil-Antrieb für ein Kraftfahrzeug gemäß Patentanspruch 1 sowie auf ein Verfahren zu dessen Herstellung gemäß Patentanspruch 8.

Bei derartigen Antrieben ist üblicherweise ein Schließteil, z.B. ein Kraftfahrzeug-Fenster oder ein Kraftfahrzeug-Schiebedach, von einem Elektromotor, insbesondere Kommutatormotor, über ein Getriebe, insbesondere ein Schneckengetriebe, zwischen einer Schließ-Endstellung und einer Öffnungs-Endstellung verstellbar. Zur Abdämpfung von bei Erreichen einer Endstellung oder bei Anlaufen gegen ein Hindernis ansonsten auf den Elektromotor und insbesondere die Getriebeanordnung einwirkenden unerwünschten Stoßbelastungen ist es bekannt, zwischen einem antriebsseitigen Getrieberad und einem abtriebsseitigen Mitnehmer Dämpfungselemente vorzusehen.

Bei einer durch die EP 0 261 525 B1 bekannten Anschlagdämpfung für einen Getriebemotor-Stellantrieb liegt axial zwi-schen dem Getrieberad und dem Mitnehmer eine elastische Dämpfungsscheibe. Zur gegenseitigen schlupffreien Drehmitnahme im Normal-Betrieb und zur gegenseitigen Relativ-Bewegung zwischen Getrieberad und Mitnehmer bei einem Anschlag greift das Getrieberad oder der Mitnehmer jeweils mit axial vorstehenden Mitnahmestegen in korrespondierende Mitnahmeöffnungen der Dämpfungsscheibe.

Durch die DE 34 03 259 C1 ist ein Fensterhebergetriebe mit einer Rückfederanordnung aus zwei koaxial hintereinander drehbar gelagerten Getriebeteilen bekannt, von welchen eines mit wenigstens einem von der Drehachse entfernt angeordneten, axialen Mitnahmevorsprung versehen ist, welcher zwischen am anderen Getriebeteil vorgesehene, gegebenenfalls schwingungsdämpfende Rückfederelemente angreift, wobei die wenigstens angenähert blattfederartigen Rückfederelemente mit dem anderen Getriebeteil einstückig ausgebildet sind; die Rückfederelemente werden dabei durch die zwischenliegenden Mitnahmevorsprünge tangential elastisch verformt.

Der durch die EP 0 549 817 B1 bekannte Gegenstand kommt dem Erfindungsgegenstand am nächsten.
Bei der durch dieses Dokument bekannten Anschlagdämpfung für einen Getriebemotor-Stellantrieb ist unter Verzicht auf eine besondere Dämpfungszwischenlage der äußere Zahnkranz des Getrieberades über federstegartige, zur Dämpfung um ein gewisses Maß tangential elastische Speichen als einstückiges Spritzgussteil mit dem Mitnehmer verbunden, an den auch noch ein Abtriebs-Ritzel angespritzt sein kann. Anstelle der einstückigen Verbindung zwischen dem Getrieberad einerseits und dem Mitnehmer andererseits durch die federstegartigen Speichen kann auch eine Mitnahmeverbindung derart vorgesehen sein, dass radiale Mitnahmestege eines der beiden Elemente zwischen tangential übergreifende Mitnahmegabeln des anderen Elementes reichen, wobei entweder die Mitnahmestege und/oder die Mitnahmegabeln im Sinne einer tangentialen Anschlagdämpfung elastisch ausgebildet sein können.

Gemäß Aufgabe vorliegender Erfindung soll trotz einfachster Fertigung und Montage eine von der Drehmitnahme zwischen Getrieberad und Mitnehmer weitgehend unabhängig auslegbare Anschlag-Dämpfung bei einer gegenseitigen Relativbewegung aufgrund einer plötzlichen Bewegungshemmung des Mitnehmers bei weiter antreibendem Getrieberad gewährleistet werden können.

Die Lösung dieser Aufgabe gelingt erfindungsgemäß durch einen Getriebemotor-Stellantrieb gemäß Patentanspruch 1 und ein Verfahren zu dessen Herstellung gemäß Patentanspruch 8; vorteilhafte Ausgestaltungen des Getriebemotor-Stellantriebs sind jeweils Gegenstand der Unteransprüche 2 bis 7.

Erfindungsgemäß sind das Getrieberad einerseits und die Mitnehmerscheibe andererseits jeweils mit den ihnen zugeordneten Drehmitnahme- bzw. Anschlagdämpfungsmitteln individuell auslegbar und trotzdem als Einzelstücke eines Spritzgussteils fertigbar und montierbar.

Zur besonders einfachen Fertigung erfolgt das gegenseitige Zusammenstecken von Getrieberad und Mitnehmer erst bei dem Einbau in ein die Bauteile aufnehmenden und mit einer zugehörigen Achse versehenen Getriebe- bzw. Abtriebsgehäuse, nachdem das Getrieberad einerseits und der Mitnehmer andererseits als getrennte, axial zueinander beabstandete Spritzgussteile einer in einer gemeinsamen Spritzgussform gießbaren Fertigungs- /Montagebaueinheit gefertigt sowie das Getrieberad einerseits und der Mitnehmer andererseits mit, insbesondere einstückig mitanspritzbaren, beim Ineinanderstecken aus ihrer Spritzgusslage in ihre gegenseitige Betriebslage ausreißbaren Verbindungs-Laschen oder dergleichen im Sinne einer Fertigungs- bzw. Montagebaueinheit verbunden sind.

Zweckmäßigerweise ist eine gegenseitige spielfreie Passung zwischen den ineinandergesteckten Bauteilen und eine derartige Steigung der jeweiligen Anlaufschrägen vorgesehen, dass eine Selbsthemmung zwischen Getrieberad und Mitnehmer nach einer gegenseitigen Anschlag-Relativbewegung vermieden ist.

Die Erfindung sowie weitere vorteilhafte Ausgestaltungen der Erfindung gemäß Merkmalen der Unteransprüche sind im folgenden anhand von Ausführungsbeispielen in der Zeichnung näher erläutert; darin zeigen:
- FIG 1;3: in perspektivischer Vorder- bzw. Rückansicht Getrieberad und Mitnehmer vor dem gegenseitigen Zusammenstecken;
- FIG 2;4: in perspektivischer Vorder- bzw. Rückansicht Getrieberad und Mitnehmer nach dem gegenseitigen Zusammenstecken.

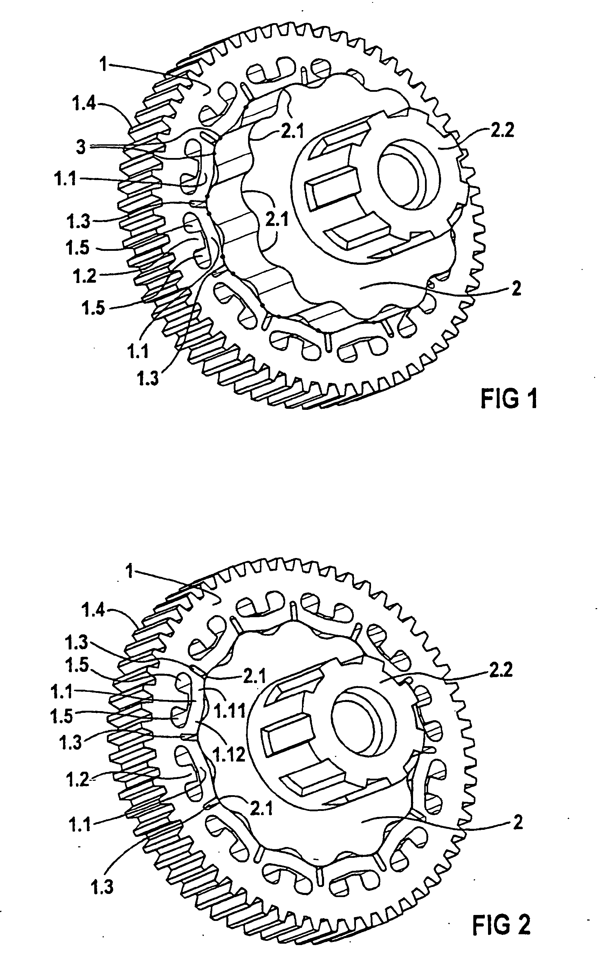

FIG 1 - 4 zeigen jeweils ein antriebsseitiges Getrieberad 1 und ein damit betriebsmäßig in Drehmitnahme-Verbindung stellbaren Mitnehmer 2, die - wie z.B. aus dem eingangs genannten Stand der Technik gemäß der EP 0 549 817 B1 bzw. EP 0 261 525 B1 bekannt - im Antriebsstrang zwischen einem elektrischen Stellmotor und einem als Schließteil zwischen einer oberen Schließstellung und einer unteren Öffnungsstellung bewegbaren Kraftfahrzeugfenster vorgesehen sind.

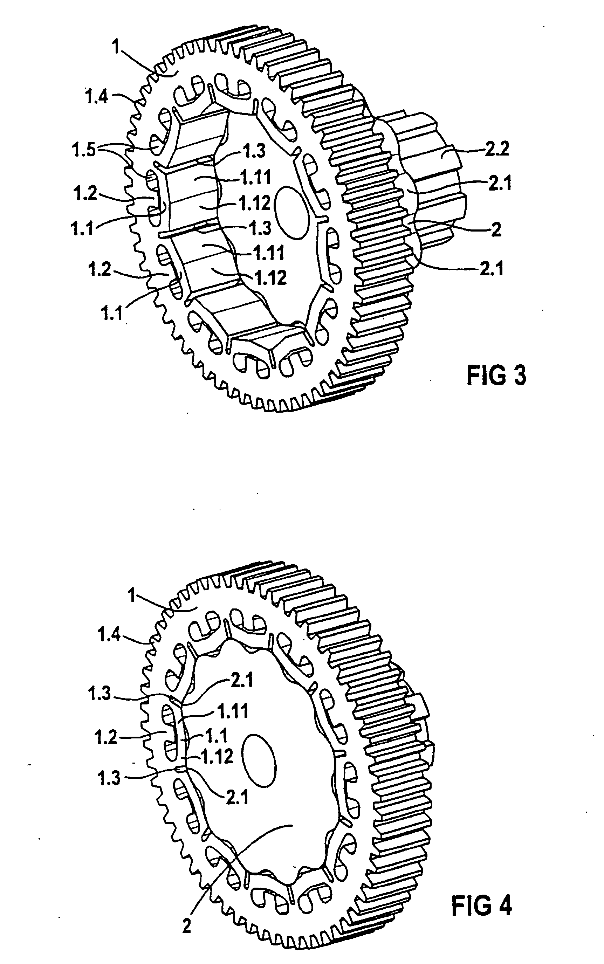

Im einzelnen zeigen FIG 1 und FIG 3 jeweils in perspektivischer Vorderansicht bzw. perspektivischer Rückansicht die Einzelbauteile des Getrieberades 1 einerseits und des Mitnehmers 2 andererseits in Fertigungs- bzw. Vormontagestellung mit gegenseitigem axialen Abstand, derart dass beide Bauteile vorzugsweise an ihren zugewandten Stirnflächen über ausreißbare oder ausbrechbare, zweckmäßigerweise bei der Spritzerstellung beider Bauteile mitspritzbaren Verbindungs-Laschen 3 als Fertigungs- bzw. Montageeinheit zusammengehalten sind.

FIG 2 und FIG 4 zeigen in perspektivischer Vorderansicht bzw. perspektivischer Rückansicht die beiden zur betriebsmäßigen Drehmitnahme-Verbindung axial ineinander gesteckten Bauteile des Getrieberades 1 einerseits und des Mitnehmers 2 andererseits, wobei die Verbindungs-Laschen 3 nunmehr ausgerissen oder ausgebrochen sind. Das axiale Einstecken des Mitnehmers 2 in das Getrieberad 1 mit gleichzeitigem Lösen der zueinander axial beabstandeten Vormontagefügung erfolgt zweckmäßigerweise beim Einbringen in ein an sich bekanntes, hier nicht gesondert dargestelltes Getriebegehäuse mit gleichzeitigem Aufstecken des Mitnehmers 2 auf eine zent rische Getriebegehäuseachse; bei dem Einbringen der Baueinheit kann zunächst der axial vor dem Getrieberad 1 positionierte Mitnehmer 2 vorteilhaft als Aufnahme-Hilfe für eine automatische Bauteilzuführung mitbenutzt werden.

Das Getrieberad 1 weist an seinen Außenumfang eine Verzahnung 1.4 auf, die in der durch den zitierten Stand der Technik bekannten Weise mit einem Schneckenrad auf einer als Getriebewelle verlängerten Motorwelle des antreibenden Elektromotors des Stellantriebes kämmt. Am Innenumfang des Getrieberades 1 sind als Federelemente 1.1 für eine Anschlagdämpfung, insbesondere beim harten Anschlag des anzutretenden Schließteils in einer Endstellung, im wesentlichen tangential verlaufende Stege vorgesehen, die tangential endseitig einstückig in das Getrieberad 1 übergehen und zwischen ihren tangential endseitigen Anformungs-Übergängen nach radial außen in Ausnehmungen 1.5 elastisch wegdrückbar sind, wobei das Maß der elastischen Verformung durch ebenfalls vorzugsweise einstückig angespritzte Begrenzungs-Anschläge 1.2 definierbar ist.

Wie insbesondere aus FIG 2 bzw. FIG 4 ersichtlich, greift der in die innere Öffnung des Getrieberades 1 eingesteckte Mitnehmer 2 zur betriebsmäßigen Drehmitnahme mit am Außenumfang des Mitnehmers 2 angeformten Nocken 2.1 in seiner Drehmitnahme-Stellung 1.3 in radial nach außen gerichtete Vertiefungen des Getrieberades 1 zwischen den tangential endseitigen Anformungen der Federelemente 1.1 derart ein, dass bei nicht vorhandenen,Anschlaggegenkräften eine formschlüssige Drehmitnahme zwischen dem Getrieberad 1 einerseits und dem Mitnehmer 2 andererseits gewährleistet ist.

Bei einem Anschlag des Schließteils gegen ein Hindernis oder insbesondere gegen einen Anschlag, z.B. bei einer oberen Schließstellung und einer unteren Öffnungsstellung eines Kraftfahrzeugfensters, wird die normale zur formschlüssigen Drehmitnahme hinreichende Kraft überschritten, derart dass bei einer Relativbewegung zwischen der durch Anschlag gebremsten Mitnehmerscheibe 2 einerseits und dem vom Elektromotor zumindest zunächst weiter angetriebenen Getrieberad 1 andererseits die Nocken 2.1 des Mitnehmers 2 tangential in der einen oder anderen Drehrichtung entlang der Anlaufschrägen 1.11 bzw.1.12 gleiten und dabei die Federelemente 1.1 in Richtung der Ausnehmungen 1.5 - mit möglicher Begrenzung durch die Begrenzungsanschläge 1.2 - elastisch wegbiegen; dadurch ist eine zu starke Stoßbelastung des Getrieberades 1 aufgrund der elastischen Abdämpfung vermeidbar ist. Das Maß der elastischen Abdämpfung kann individuell durch die Form und Anbindung der Federelemente 1.1 an das Getrieberad 1 sowie die Form und Stärke der Anlaufschrägen 1.11;1.12 sowie die Begrenzungs-Anschläge 1.2 individuell festgelegt werden.

Zweckmäßigerweise sind das Getrieberad 1 und der Mitnehmer 2 im Sinne einer nach ihrem Zusammenstecken gegenseitigen spielfreien Passungs-Berührung ausgebildet und sind die Anlaufschrägen 1.11;1.12 im Sinne einer von einer Selbsthemmung zwischen den Federelementen 1.1 und den andrückenden Nocken 2.1 freien gegenseitigen Relativbewegung zwischen dem Getrieberad 1 und dem Mitnehmer 2 derart ausgebildet, dass nach Wegfall einer Anschlagkraft die Nocken selbsttätig in ihre normale betriebsmäßige Drehmitnahmelage 1.3 zwischen den Federelementen 1.1 rückstellbar sind.

An den Mitnehmer 2 ist ein Abtriebs-Kupplungselement 2.2, insbesondere ein Abtriebsritzel, axial vorstehend einstückig angespritzt; das Abtriebsritzel ist bei der Gesamtmontage eines Kraftfahrzeug-Seilfensterheberantriebs mit dessen Seilscheibe zusammensteckbar.

## Patentansprüche

1. Getriebemotor-Schließteil-Antrieb für ein Kraftfahrzeug, mit
- einem antriebsseitigen Getrieberad (1) und einem abtriebsseitigen Mitnehmer (2), die aus einer axial zueinander beabstandeten Fertigungs- und / oder Montagelage zur Herstellung ihrer Betriebslage mit unmittelbarer gegenseitiger Drehmitnahme-Verbindung axial ineinandersteckbar sind, wobei das Getrieberad (1) oder der Mitnehmer (2) mit jeweils einstückigen elastischen Federelementen (1.1) versehen ist, gegen die korrespondierende Nocken (2.1) des Mitnehmers (2) oder des Getrieberades (1) im Sinne einer gegenseitigen Anschlagdämpfung bei gegenseitiger Umdrehungs-Relativbewegung aufgrund einer Bewegungshemmung des Mitnehmers (2) bei weiter angetriebenem Getrieberad (2) andrückbar sind,
**dadurch gekennzeichnet, dass**
das Getrieberad (1) und der Mitnehmer (2) als Einzelstücke eines Spritzgussteils ausgebildet sind und die Federelemente (1.1) als im wesentlichen tangential verlaufende Federstege des Getrieberades (1) oder des Mitnehmers (2) derart angeordnet und mit Anlaufschrägen (1.11; 1.12) versehen sind, dass sie durch die bei einer gegenseitigen Umdrehungs-Relativbewegung gegen die Anlaufschrägen (1.11:1.12) gleitend anlaufenden Nocken (2.1) radial elastisch verformbar sind.

2. Getriebemotor-Schließteil-Antrieb nach Anspruch 1 mit dem Merkmal:
- Die Anlaufschrägen (1.11;1.12) sind im Sinne einer von einer Selbsthemmung zwischen den Federelementen (1.1) und den andrückenden Nocken (2.1) freien gegenseitigen Umdrehungs-Relativbewegung zwischen dem Getrieberad (1) und dem Mitnehmer (2) ausgebildet.

3. Getriebemotor-Schließteil-Antrieb nach Anspruch 1 und/oder 2 mit dem Merkmal:
- Die Federelemente (1.1) sind tangential endseitig an das Getrieberad (1) oder an den Mitnehmer (2) angeformt und bei einer gegenseitigen Umdrehungs-Relativbewegung zwischen den tangential beabstandeten Anformungsverbindungen in den Bereich einer Ausnehmung (1.5) durch die gegen die Anlaufschrägen (1.11;1.12) gleitend anlaufenden Nocken (2.1) elastisch wegdrückbar.

4. Getriebemotor-Schließteil-Antrieb nach Anspruch 3 mit dem Merkmal:
- Das Maß der radialen elastischen Verformung der Federelemente (1.1) ist durch einen, insbesondere einstückig an das jeweils aufnehmende Bauteil des Getrieberades (1) oder des Mitnehmers (2) angeformten, Begrenzungs-Anschlag (1.2) begrenzbar.

5. Getriebemotor-Schließteil-Antrieb nach zumindest einem der Ansprüche 1-4 mit dem Merkmal:
- Das Getrieberad (1) und der Mitnehmer (2) sind im Sinne einer in ihrer gegenseitigen Betriebslage gegenseitigen spielfreien Passungs-Berührung ausgebildet.

6. Getriebemotor-Schließteil-Antrieb nach zumindest einem der Ansprüche 1-5 mit dem Merkmal:
- Das Getrieberad (1) und der Mitnehmer (2) sind im Sinne eines mit nur in Axialrichtung ziehbaren Formteilen herstellbaren Spritzgussteils ausgebildet.

7. Getriebemotor-Schließteil-Antrieb nach zumindest einem der Ansprüche 1-8 mit dem Merkmal:
- Der Mitnehmer (2) ist mit einem insbesondere einstückig angespritzten, Abtriebselement (2.2) versehen.

8. Verfahren zur Herstellung eines Getriebemotor-Schließteil-Antriebes nach zumindest einem der Ansprüche 1-7 mit dem Merkmal:
- Das Getrieberad (1) und der Mitnehmer (2) werden als getrennte, axial zueinander beabstandete Spritzgussteile einer in einer gemeinsamen Spritzgussform gießbaren Fertigungs- / Montagebaueinheit gefertigt;

9. Verfahren zur Herstellung eines Getriebemotor-Schließteil-Antriebes nach Anspruch 8 mit dem Merkmal:
- Das Getrieberad (1) einerseits und der Mitnehmer (2) andererseits sind mit, insbesondere einstückig mitanspritzbaren, Verbindungselementen (3), insbesondere Verbindungslaschen, im Sinne einer Fertigungs- / Montagebaueinheit in Vormontagefügung zusammengehalten, wobei die Verbindungselemente beim Ineinanderstecken von Getrieberad (1) und Mitnehmer (2) ausreißbar oder ausbrechbar gestaltet sind.

## Claims

1. Drive for the locking element of a geared motor for a motor vehicle with
- a gearwheel (1) on the drive side and a driver (2) on the take-off side, which can be inserted into each other axially from their axially remote production and/or assembly positions to produce their operating position with a direct and mutual rotational drive connection, with the gearwheel (1) or driver (2) being provided with single-piece, elastic spring elements (1.1) respectively, against which corresponding cams (2.1) of the driver (2) or gearwheel (1) can be pressed, to provide mutual stop damping in the event of mutual relative rotational movement due to inhibition of the movement of the driver (2) when the gearwheel (2) is driven further,
**characterised in that**
the gearwheel (1) and driver (2) are configured as individual parts of an injection moulded part and the spring elements (1.1) are arranged as essentially tangential spring segments of the gearwheel (1) or the driver (2) and provided with start-up inclinations (1.11; 1.12) such that they can be deformed radially in an elastic fashion due to the cams (2.1) as they start up sliding against the start-up inclinations (1.11; 1.12) in a mutual relative rotational movement.

2. Drive for the locking element of a geared motor according to claim 1 with the feature:
- the start-up inclinations (1.11; 1.12) are configured to provide mutual relative rotational movement between the gearwheel (1) and the driver (2) free from automatic locking between the spring elements (1.1) and the cams (2.1) pressing thereon.

3. Drive for the locking element of a geared motor according to claim 1 and/or 2 with the feature:
- the ends of the spring elements (1.1) are formed tangentially onto the gearwheel (1) or driver (2) and can be pushed away in an elastic fashion during mutual relative rotational movement between the tangentially remote forming connections in the area of a recess (1.5) by the cams (2.1) as they start up and slide against the start-up inclinations (1.11; 1.12) .

4. Drive for the locking element of a geared motor according to claim 3 with the feature:
- the degree of radial elastic deformation of the spring elements (1.1) can be limited by a limiting stop (1.2) formed in particular as a single piece onto the receiving component of the gearwheel (1) or driver (2) respectively.

5. Drive for the locking element of a geared motor according to at least one of claims 1 to 4 with the feature:
- the gearwheel (1) and driver (2) are configured to provide mutual, play-free fit contact in their mutual operating positions.

6. Drive for the locking element of a geared motor according to at least one of claims 1 to 5 with the feature:
- the gearwheel (1) and driver (2) are configured to form an injection moulded part that can be produced with shaped parts that can only be drawn in an axial direction.

7. Drive for the locking element of a geared motor according to at least one of claims 1 to 8 with the feature:
- the driver (2) is provided with a take-off element (2.2) that is injected on in one piece in particular.

8. Method for producing a drive for the locking element of a geared motor according to at least one of claims 1 to 7 with the feature:
- the gearwheel (1) and driver (2) are manufactured as separate, axially remote injection moulded parts of a manufacture/assembly unit that can be moulded in a common injection mould.

9. Method for producing a drive for the locking element of a geared motor according to claim 8 with the feature:
- the gearwheel (1) on the one hand and the driver (2) on the other hand are held together with connecting elements (3) that can in particular be injected on as a single piece, in particular connecting plates, to form a manufacture/assembly unit, in the pre-assembly joining operation, with the connecting elements being configured such that they can be pulled out or broken out when the gearwheel (1) and driver (2) are being inserted into each other.

## Revendications

1. Commande de pièce de fermeture de moto-réducteur pour un véhicule automobile comprenant :
une roue d'engrenage (1) côté entraînement et un entraîneur (2) côté entraîné, qui, à partir d'une position de fabrication et/ou de montage dans laquelle ils sont espacés l' un de l'autre axialement, sont emboîtables l'un dans l'autre axialement pour la réalisation de leur position de fonctionnement avec liaison d'entraînement rotatif directe mutuelle, la roue d'engrenage (1) ou l'entraîneur (2) étant munis d'éléments ressort (1.1) élastiques formés d'une seule pièce, contre lesquels des cames (2.1) correspondantes de l'entraîneur (2) ou de la roue d'engrenage (1) peuvent être pressées afin d'obtenir un amortissement de butée mutuel lors du mouvement relatif de rotation mutuel en raison d'un arrêt de mouvement de l'entraîneur (2) alors que la roue d'engrenage (2) est encore entraînée,
**caractérisé en ce que**
la roue d'engrenage (1) et l' entraîneur (2) sont réalisés sous forme de pièces individuelles d'une pièce moulée par injection et les éléments ressort (1.1) sont disposés comme des barrettes de ressort de la roue d'engrenage (1) ou de l'entraîneur (2) qui s'étendent de façon sensiblement tangentielle et sont munis de biseaux de butée (1.11 ; 1.12) de telle façon qu'ils sont déformables radialement, de façon élastique, par les cames (2.1) qui butent en glissant contre les biseaux de butée (1.11 ; 1.12), lors d'un mouvement relatif de rotation mutuel.

2. Commande de pièce de fermeture de moto-réducteur selon la revendication 1 avec la caractéristique :
les biseaux de butée (1.11 ; 1.12) sont réalisés entre la roue d'engrenage (1) et l'entraîneur (2) pour un mouvement relatif de rotation mutuel sans blocage automatique entre les éléments ressort (1.1) et les cames qui appuient.

3. Commande de pièce de fermeture de moto-réducteur selon la revendication 1 et/ou 2 avec la caractéristique :
les éléments ressort (1.1) sont formés, au niveau de leurs extrémités en direction tangentielle, sur la roue d'engrenage (1) ou l'entraîneur (2) et peuvent, lors d'un mouvement relatif de rotation mutuel, être pressés de façon élastique entre les liaisons espacées de façon tangentielle dans la zone d'un creux (1.5) par les cames (2.1) qui butent en glissant contre les biseaux de butée (1.11; 1.12).

4. Commande de pièce de fermeture de moto-réducteur selon la revendication 3 avec la caractéristique :
le degré de la déformation élastique radiale des éléments ressort (1.1) peut être limité par au moins une butée de limite (1.2) qui est formée, en particulier d'un seul tenant, sur l'élément de la roue d'engrenage (1) ou l'élément de l'entraîneur (2) concerné.

5. Commande de pièce de fermeture de moto-réducteur selon au moins une des revendications 1-4 avec la caractéristique :
la roue d'engrenage (1) et l'entraîneur (2) sont réalisés de telle façon qu'il y a un contact d'ajustement mutuel, sans jeu, dans leur position de fonctionnement mutuelle.

6. Commande de pièce de fermeture de moto-réducteur selon au moins une des revendications 1-5 avec la caractéristique :
la roue d'engrenage (1) et l'entraîneur (2) sont réalisés comme une pièce moulée par injection ne pouvant être fabriquée qu'avec des moules étirables en direction axiale.

7. Commande de pièce de fermeture de moto-réducteur selon au moins une des revendications 1-6 avec la caractéristique :
l'entraîneur (2) est muni d'un élément entraîné (2.2), en particulier moulé par injection en une seule pièce.

8. Procédé pour la fabrication d'une commande de pièce de fermeture de moto-réducteur selon au moins une des revendications 1-7 avec la caractéristique :
la roue d'engrenage (1) et l' entraîneur (2) sont fabriqués comme des pièces moulées par injection séparées, espacées l'une de l'autre axialement, issues d'une unité de montage/de fabrication pouvant être moulés dans un moule de moulage par injection commun.

9. Procédé pour la fabrication d'une commande de pièce de fermeture de moto-réducteur selon la revendication 8 avec la caractéristique :
la roue d'engrenage (1) d'un côté et l'entraîneur (2) de l'autre côté sont maintenus ensemble comme une unité de fabrication / de montage dans l'assemblage de pré-montage avec des éléments de liaison (3), en particulier des attaches pouvant être moulées avec par injection, d'une seule pièce, les éléments de liaison (3) étant réalisés de telle façon que lors de l'emboîtement de la roue d'engrenage (1) et de l'entraîneur (2), ils sont déchirables ou cassables.
